# FASCICULE DE BREVET EUROPEEN

(11) **EP 0 478 081 B1**
(45) Date de publication et mention de la délivrance du brevet: **17.04.1996**
(21) Numéro de dépôt: 91202447.8
(22) Date de dépôt: 20.09.1991
(51) Int. Cl.: G05D 23/19, F24C 15/10

(54) **Table chauffante à commandes automatiques**
Heizplatte mit automatischer Steuerung
Hot plate with automatic control

(30) Priorité: 28.09.1990 FR 9011981
(43) Date de publication de la demande: 01.04.1992
(73) Titulaire: LABORATOIRES D'ELECTRONIQUE PHILIPS S.A.S., F-94450 Limeil-Brévannes (FR); Philips Electronics N.V., NL-5621 BA Eindhoven (NL)
(72) Inventeur: Hazan, Jean-Pierre, Société Civile S.P.I.D., F-75008 Paris (FR); Polaert, Rémy, Société Civile S.P.I.D., F-75008 Paris (FR); Nagel, Jean-Louis, Société Civile S.P.I.D., F-75008 Paris (FR)
(74) Mandataire: Landousy, Christian

(56) Documents cités:
- EP-A- 0 374 868
- DE-A- 3 619 762
- FR-A- 2 188 988
- FR-A- 2 465 163
- US-A- 4 499 368
- US-A- 4 775 913

## Description

L'invention concerne une table chauffante munie d'au moins un foyer chauffé par au moins un élément chauffant activé par des commandes de fonctionnement,
- au moins un détecteur de présence qui détecte lorsqu'au moins un foyer est muni d'un ustensile,
- des moyens de commande pour désactiver ou réduire le chauffage dudit foyer lorsque le détecteur de présence signale que l'ustensile a été enlevé.

Les tables chauffantes concernées ci-après sont préférentiellement mais non exclusivement celles à usage domestique. Elles sont constituées de plusieurs foyers localisés destinés à recevoir des ustensiles de cuisine en vue de chauffer leur contenu. Les moyens de chauffage sont constitués généralement par des éléments à chauffage par effet Joule, par rayonnement ou par induction. Lors de leur utilisation il est nécessaire de mettre en marche l'élément chauffant, de régler, éventuellement à plusieurs reprises, la puissance électrique consommée puis de mettre à l'arrêt l'élément chauffant en fin d'utilisation.

Lorsque l'ustensile est enlevé pour un court instant, l'utilisateur n'éprouve pas nécessairement la nécessité d'arrêter le fonctionnement de l'élément chauffant. Ceci peut avoir différentes conséquences :
- il y a une dissipation inutile d'énergie électrique,
- l'élément chauffant, opérant alors sans charge peut avoir une température difficilement maitrisable et notamment peut provoquer un rayonnement qui peut gêner voire perturber l'utilisateur par éblouissement ou brûlure.

Il est donc souhaitable de maîtriser le fonctionnement de l'élément chauffant au cours de ces interventions. Mais bien évidemment le fonctionnement des autres éléments chauffants ne doit pas en subir de conséquences.

On connaît le document FR-A-2 465 163 qui décrit des dispositifs économiseurs d'énergie pour foyers de cuisson. Ils comprennent pour cela une détecteur de présence qui détecte lorsqu'un ustensile est enlevé du foyer. Le dispositif met en régime d'attente le foyer lors qu'il n'est plus porteur d'un récipient et permet au foyer de reprendre immédiatement son régime dès que le récipient est reposé sur le foyer. Il n'y a pas de prise en compte de la durée de l'interruption.

On connaît également le document US-A-4 775 913 qui décrit un dispositif de commande d'un four qui détecte la présence d'un utilisateur et qui met le four hors fonctionnement lorsque l'utilisateur n'est pas au voisinage du four pendant une durée prédéterminée et ceci dans un but de sécurité. Néanmoins, si l'utilisateur revient avant la fin d'une seconde durée, le four sera remis en fonctionnement. Mais ceci ne tient pas compte des actions qui ont pu se dérouler pendant cette absence.

On connait par ailleurs le document US 4 499 368 qui concerne un système pour détecter un enlèvement d'ustensile sur une table chauffante. Pour cela on mesure une durée pendant laquelle la température de l'ustensile dépasse un seuil de température. Lorsque cette durée dépasse une durée prédéterminée, l'alimentation en énergie électrique de la table chauffante est coupée. Selon que la table chauffante est programmée pour frire, bouillir, mijoter, ... on adapte les durées prédéterminées. Elles sont de l'ordre de 10 à 20 minutes. Ces valeurs sont justifiées par le souci de ne pas laisser en fonctionnement une table chauffante soit sans ustensile, soit avec un ustensile vide.

Mais une telle table chauffante ne dispose d'aucun contrôle de fonctionnement lors d'interruptions de courtes durées.

Or dans l'art culinaire il existe de nombreux cas où il est nécessaire de retirer une casserole d'un foyer pour un court instant pour la replacer ensuite. Si l'utilisateur veut éviter les conséquences dudit rayonnement une solution consiste à désactiver l'élément chauffant et à le réactiver manuellement ensuite. Cette procédure s'avère vite fastidieuse.

Le problème posé consiste à déterminer un automatisme de fonctionnement marche/arrêt qui évite les effets néfastes dudit rayonnement lorsqu'un ustensile est momentanément retiré. Cet automatisme doit être efficace, c'est-à-dire qu'il doit distinguer correctement la situation où l'ustensile est momentanément retiré puis replacé des autres situations et agir en conséquence.

La solution consiste en ce que la table chauffante comprend :
- un temporisateur qui réactive le chauffage dudit foyer lorsque le détecteur de présence détecte que l'ustensile est replacé sur ledit foyer et que la durée de l'absence a été inférieure à une durée déterminée.

Ceci avantageusement permet de détecter la présence d'un ustensile dans la continuité d'une suite d'actions. On pourrait penser à mettre en oeuvre, après que l'enlèvement de la casserole a été détecté, un temporisateur qui désactiverait le foyer. Mais une simple constante de temps est insuffisante : ou sa durée est faible et l'élément chauffant est désactivé trop rapidement et il faut le réactiver manuellement très souvent ; ou sa durée est élevée et les inconvénients du rayonnement ne sont pas maitrisés. De même une mise en route automatique et systématique par la simple détection d'un objet peut s'avérer dangereuse à l'usage car on peut vouloir simplement y placer des ustensiles sans vouloir les chauffer ou placer un livre de recettes par exemple.

Selon l'invention lorsque la puissance électrique est seulement réduite, le foyer peut rester légèrement lumineux ce qui attire l'attention de l'utilisateur sans risque d'éblouissement et signale que le foyer est prêt à repartir automatiquement si l'ustensile est reposé sur le foyer.

La durée déterminée pendant laquelle l'élément chauffant peut être réactivé, après l'enlèvement d'une casserole chauffée, peut être fixée à l'avance. Ainsi si la durée de l'absence est inférieure à cette durée déterminée, l'élément chauffant concerné est réactivé dès que l'ustensile est replacé sur le foyer. Si la durée de l'absence est supérieure à cette durée déterminée, l'élément chauffant concerné n'est pas réactivé lorsque l'ustensile est replacé sur le foyer. Il est totalement désactivé s'il avait été placé à puissance réduite. En effet la valeur de la durée déterminée est fondée sur le fait que des absences de courte durée se rapportent à une même suite d'opérations alors que des absences de plus longue durée se rapportent à des opérations différentes.

Le détecteur de présence peut faire appel à différents principes. Il peut s'agir de détecter les forces de pesanteur dues à l'ustensile et à son contenu. Il peut s'agir d'une barrière ayant un émetteur et un récepteur de lumière ou d'ultra-sons. L'ustensile est alors placé sur le trajet du faisceau lumineux ou ultrasonore. Il peut s'agir de détecter par effet capacitif ou inductif la variation de fréquence d'un circuit oscillant haute fréquence. Le fait de poser ou de retirer un ustensile va influencer la fréquence d'oscillation de ce circuit ce qui permet de détecter la présence ou l'absence de l'ustensile.

Ce premier niveau d'automatisme suppose un utilisateur suffisamment attentionné qui a priori ne sera pas tenté d'utiliser un foyer encore chaud pour y poser un ustensile qui ne supporte pas la chaleur.

Au lieu de fixer à l'avance la valeur de la durée déterminée il est possible de la faire dépendre d'un paramètre de l'opération en cours, par exemple de la température du foyer. Dans ce cas le foyer est en outre muni d'un détecteur de température, la durée déterminée étant celle nécessaire pour que la température du foyer devienne inférieure à une température prédéterminée.

Lorsque le détecteur de présence détecte le poids de l'ustensile (avec ou sans son contenu) il est possible selon un mode simplifié que le détecteur de présence opère une mesure grossière du poids de la charge placée sur le foyer. Mais préférentiellement, selon un mode plus précis, le détecteur de présence est suffisamment précis pour opérer une mesure de poids. Dans ce cas il est tenu compte de la quasi identité du poids avant l'enlèvement de l'ustensile et après sa remise en place pour mettre en oeuvre l'automatisme. La réactivation du chauffage du foyer ne se fait que si la variation de poids de l'ustensile, entre les moments avant et après l'absence, est inférieure, en valeur absolue, à une limite prédéterminée. Cela est fondé sur la présomption que c'est la même casserole qui est reposée pour poursuivre la cuisson. Avantageusement cela permet de ne pas prendre en compte certaines maladresses de l'utilisateur qui pourrait poser sur le foyer un ustensile non approprié. Dans tous les cas il est possible lors de la réactivation d'opérer avec une puissance réduite pendant quelques instants pour laisser à l'utilisateur le temps de réagir si nécessaire. Une alarme sonore (bip) ou optique (clignotant) peut également être enclenchée pendant ce temps.

L'invention sera mieux comprise à l'aide des figures suivantes données à titre d'exemples non limitatifs qui représentent :
figure 1 : un schéma d'une table chauffante classique.
figure 2A : un schéma selon l'invention des organes de commande dans le cas d'un détecteur de présence qui peut être un détecteur de poids.
figures 2B, 2C : deux diagrammes de fonctionnement correspondant à la figure 2A respectivement dans le cas d'un détecteur de présence opérant par tout ou rien et dans le cas d'un détecteur de présence opérant par pesée.
figure 3A : un schéma selon l'invention des organes de commande dans le cas d'un détecteur de présence et d'un détecteur de température.
figure 3B : un diagramme de fonctionnement correspondant à la figure 3A.
figure 4A : un schéma selon l'invention des organes de fonctionnement dans le cas d'un détecteur de poids et d'un détecteur de température.
figure 4B : un diagramme de fonctionnement correspondant à la figure 4A.
figures 5A, 5B, 5C, 5D, 5E : des diagrammes représentant différentes possibilités lors du démarrage de la plaque chauffante à partir d'un état initial de repos.

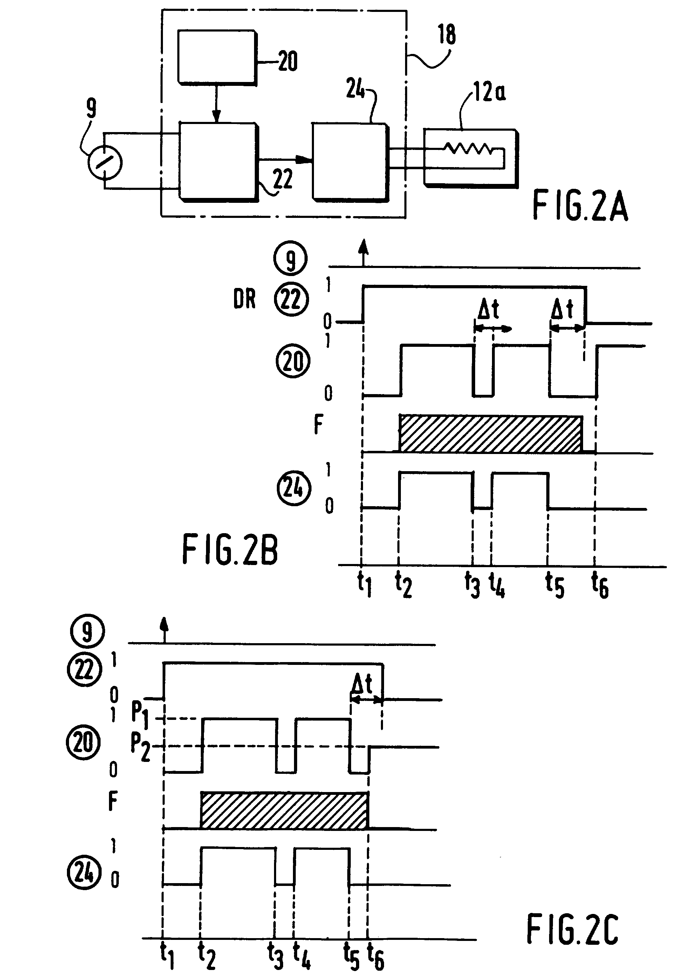

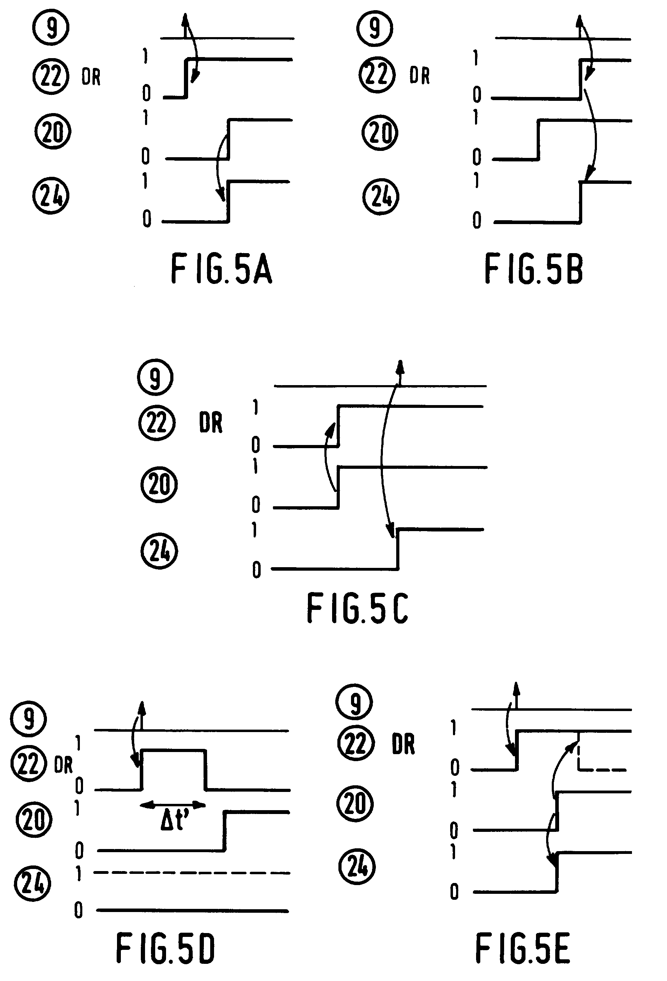

Pour montrer la diversité des conditions de démarrage (état initial) à partir de l'action de l'utilisateur, les situations décrites dans les figures 2A à 4B font état de mises en oeuvre différentes (avec ou sans constante de temps associée à cette action). Les figures 5A à 5E (voir ci-après) développent certaines de ces situations.

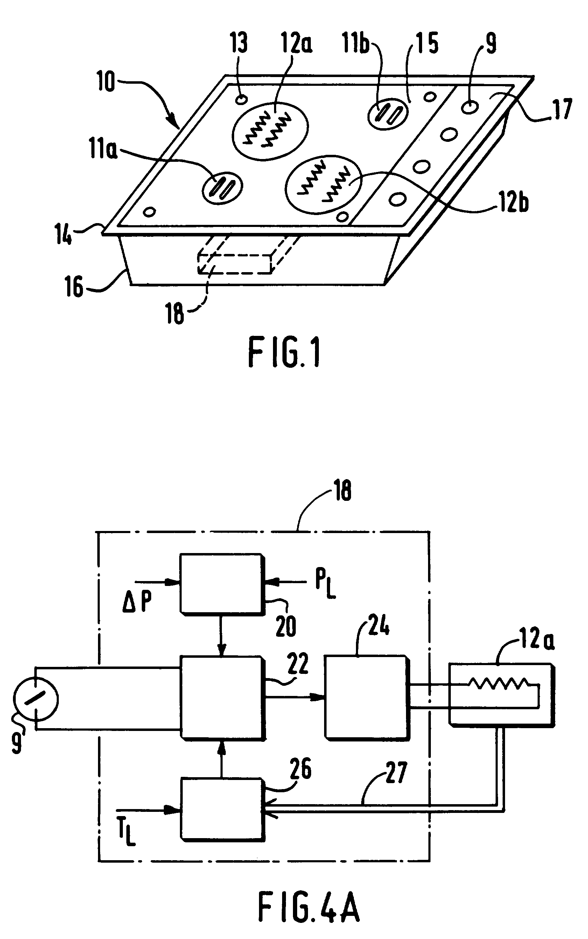

La figure 1 représente une table chauffante 10 classique comprenant des éléments chauffants 11a, 11b, 12a, 12b disposés sous une plaque vitrocéramique 15 qui est supportée par un cadre métallique 14 et un berceau 16. Une extrémité de la table chauffante 10 dispose d'une zone 17 dans laquelle sont disposées des commandes de fonctionnement 9 utilisées par l'utilisateur pour faire fonctionner la table chauffante. Ces commandes de fonctionnement sont par exemple des boutons 9. Des voyants 13 permettent d'indiquer lorsqu'un élément chauffant est en fonctionnement, ou lorsque sa température résiduelle est encore supérieure à une certaine valeur critique. Des organes de commande 18 permettent d'appliquer aux éléments chauffants les commandes de fonctionnement actionnées par l'utilisateur.

La figure 2A représente selon l'invention un schéma des organes de commande 18 qui comprennent pour chaque élément chauffant (12a par exemple) un temporisateur 22, un détecteur de présence 20 et un organe de puissance 24. Ce dernier agit sur l'élément chauffant 12a. Le temporisateur 22 opère sous le contrôle du détecteur de présence 20 et de la commande de fonctionnement 9 par exemple un bouton.

Le diagramme de fonctionnement est représenté sur la figure 2B. A un instant t₁, l'utilisateur actionne le bouton 9 pour la mise en marche. Cette action provoque le passage à l'état logique 1 d'un drapeau DR, état logique qui est mémorisé par exemple dans une bascule placée dans le temporisateur 22. Supposons qu'à cet instant t₁ aucun ustensile ne soit placé au-dessus de l'élément chauffant 12a, dans ce cas le détecteur de présence 20 indique l'absence d'ustensile (état 0). Le temporisateur est alors bloqué et aucune puissance électrique (état 0) n'est délivrée par l'organe de puissance 24.

A l'instant t₂ le détecteur de présence 20 indique la présence d'un ustensile (état 1). Le temporisateur 22 envoie une commande à l'organe de puissance 24 qui délivre une puissance électrique (état 1).

A l'instant t₃ l'ustensile est enlevé (état 0). La puissance électrique est alors coupée. Au temps t₄ l'ustensile est remis (état 1). La durée t₃ t₄ étant inférieure à une durée déterminée Δt, le temporisateur 22 permet alors à la puissance électrique d'être réactivée automatiquement.

A l'instant t₅, l'ustensile est à nouveau enlevé (état 0) puis remis à l'instant t₆ (état 1). La durée t₅ t₆ étant supérieure à la durée déterminée, le drapeau DR repasse à l'état 0 à la fin de la durée Δt. Le temporisateur 22 ne permet pas à l'énergie électrique d'être réactivée dans l'élément chauffant. La fenêtre temporelle F représente l'état de disponibilité de l'automatisme du temporisateur, c'est-à-dire la période de temps pendant laquelle l'automatisme peut être déclenché, sous l'action conjointe de l'utilisateur et de la validation à durée prédéterminée Δt.

La figure 2C représente un autre diagramme de fonctionnement dans le cas où le détecteur de présence est un détecteur de poids. Celui-ci est donc capable de déterminer non seulement la présence mais également le poids de l'ustensile (avec son contenu éventuéllement).

Entre l'instant t₁ et l'instant t₅ les situations sont les mêmes que sur les figures 2B et 2C, la différence étant que le détecteur de poids détecte successivement le même poids P₁. A l'instant t₆ l'ustensile est replacé mais avec un poids réduit à la valeur P₂. Or bien que la durée t₅ t₆ représentée sur la figure 2C soit inférieure à la durée déterminée Δt, la puissance électrique ne peut pas être réactivée car la variation de poids |P₁-P₂| est supérieure en valeur absolue à une variation prédéterminee. Ceci constitue un indice que l'opération commençant à l'instant t₆ n'est pas la suite des opérations précédentes. Une remise en marche manuelle doit alors être opérée pour valider cette opération. La fenêtre F représente l'état de disponibilité du redémarrage automatique sous l'action conjointe de l'utilisateur et du détecteur de poids (dans l'exemple présenté la durée Δt n'intervient pas).

Le détecteur de poids peut être du type décrit dans le brevet US 4 476 946. Le foyer est alors porté par un dispositif à jauges de contrainte qui fléchissent sous l'action du poids de l'ustensile. Les signaux électriques délivrés par les jauges sont exploités pour déterminer le poids et pour commander le temporisateur 22 (figure 2A).

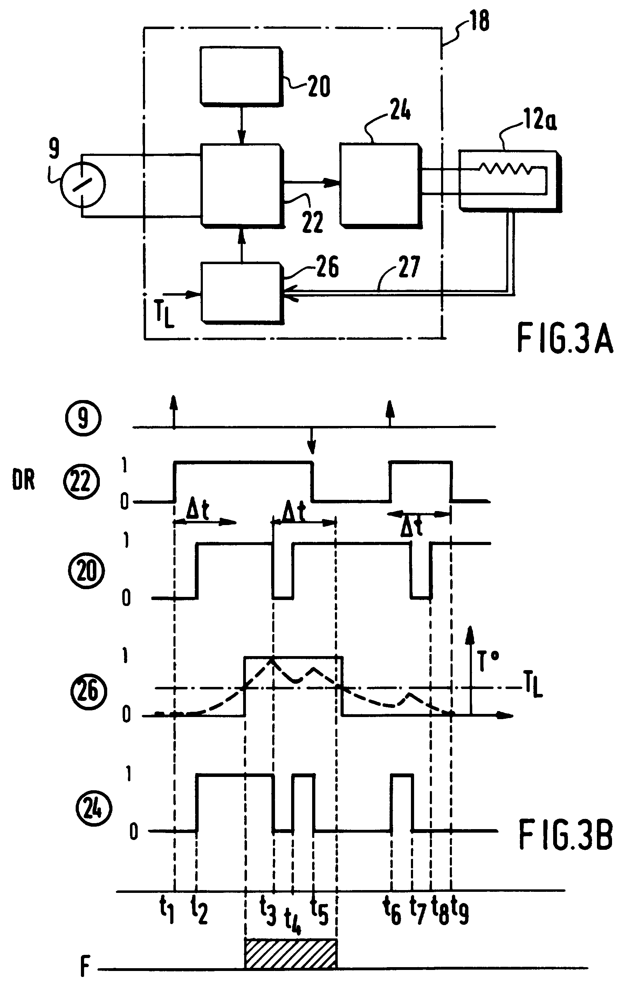

Le schéma de la figure 3A représente un autre mode de réalisation de l'invention. En plus des éléments de la figure 2A, l'organe de commande 18 comprend un détecteur de température 26 qui mesure (connexion 27) la température du foyer 12a. Le détecteur de température 26 commande également le temporisateur 22 selon le diagramme de fonctionnement représenté sur la figure 3B.

A l'instant t₁ l'utilisateur actionne le bouton 9. Cette action provoque le passage à l'état 1 du drapeau DR. A l'instant t₂ le détecteur de présence 20 détecte un ustensile (état 1) ce qui provoque l'activation de l'organe de puissance 24 (la durée t₁ t₂ est inférieure à Δt). Le détecteur de température 26 indique une température croissante qui vient à dépasser la valeur limite T_{L}. Au temps t₃ l'ustensile est enlevé pendant une durée inférieure à Δt. La température étant supérieure à la limite T_{L} le détecteur de température délivre une commande à l'état logique 1 ce qui permet au temporisateur de réactiver l'alimentation de l'élément chauffant 24. Au temps t₅ l'utilisateur désactive l'élément chauffant (DR passe à l'état 0) donc sa température diminue en dessous du seuil T_{L}. Au temps t₆ l'utilisateur actionne le bouton 9. Le temporisateur permet à l'énergie électrique d'être réactivée. Au temps t₇ l'ustensile est enlevé pendant une durée t₇ t₈ inférieure à Δt. Mais la température étant inférieure à la température limite T_{L} le temporisateur ne permet pas à l'élément chauffant d'être alimenté. Le drapeau DR passe à l'état 0 à la fin du temps Δt. Il faut alors une action de l'utilisateur pour permettre le démarrage du chauffage. La fenêtre F représente l'état de disponibilité du redémarrage automatique pour cet exemple.

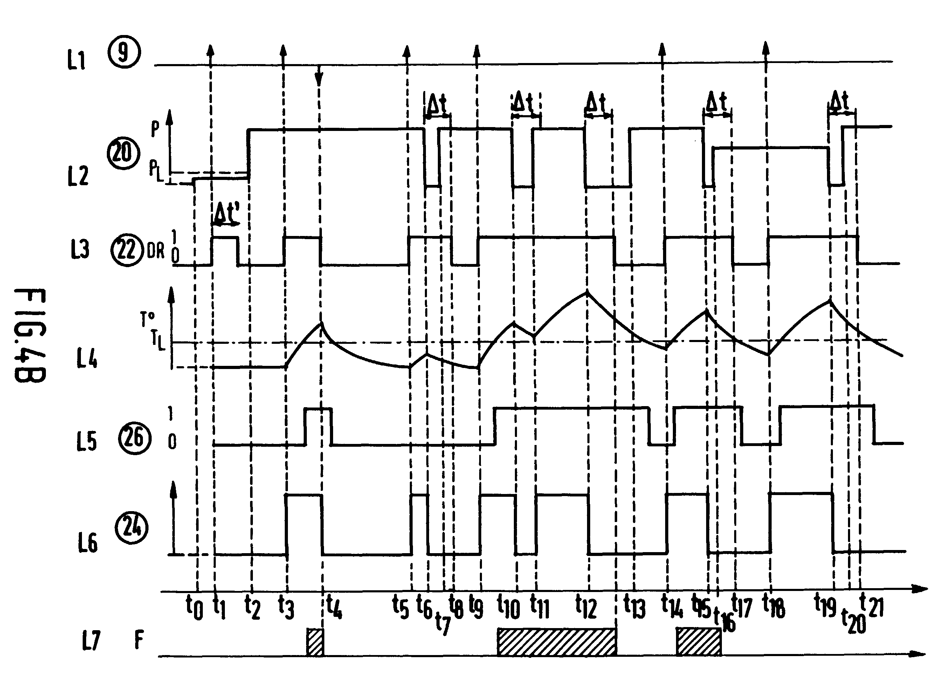

La figure 4A représente le cas où coopèrent à la fois un détecteur de poids 20 et un détecteur de température 26.

La figure 4B représente un exemple d'une suite d'opérations qui mettent en lumière différentes situations pouvant se présenter lors de l'utilisation de la table chauffante selon un mode de réalisation. Dans cet exemple le détecteur de poids 20 (figure 4A) a été programmé avec une valeur de poids limite P_{L}. En dessous de cette valeur le détecteur de poids 20 ne valide aucune présence. Il est également programmé avec une variation de poids ΔP de sorte que le détecteur de poids 20 valide un signal de présence (transmis au temporisateur) uniquement lorsque la variation entre deux mesures successives de poids est inférieure à ΔP.

La figure 4B représente de haut en bas :
L1 - l'action opérée par l'utilisateur sur l'organe de commande 9. Une flèche dirigée vers le haut représente une demande de mise en fonctionnement et une flèche dirigée vers le bas représente une demande d'arrêt,
L2 - la valeur du poids P déterminée par le détecteur de poids 20,
L3 - l'état d'un drapeau DR, déterminé par le temporisateur 22 qui tient compte de l'action effectuée par l'utilisateur et de la désactivation effectuée par le temporisateur,
L4 - la température du foyer déterminée par le détecteur de température 26,
L5 - le signal délivré par le détecteur de température 26, signal qui est à l'état logique 0 lorsque la température est inférieure à la température limite T_{L} et qui est à l'état logique 1 dans le cas inverse,
L6 - la puissance électrique délivrée par l'organe de puissance 24 à l'élément chauffant,
L7 - une représentation par des zones hachurées des durées des fenêtres F au cours desquelles la remise en route automatique peut être opérée dans la suite d'opérations présentées.

La suite d'opérations est repérée horizontalement par les instants t₀ à t₂₁.
- temps t₀ : une charge d'un poids inférieur à P_{L} est placée,
- temps t₁ : l'utilisateur opère une mise en route. Le drapeau DR passe à l'état 1. Le poids étant trop faible, cette action n'est pas prise encompte,
- temps t₂ : une charge d'un poids supérieur à P_{L} est placée, mais la durée t₂-t₁ étant supérieure à une valeur prédéterminée Δt', le drapeau DR retombe à zéro et le chauffage n'est pas mis en route,
- temps t₃ : l'utilisateur opère une mise en fonctionnement. Le poids étant suffisant, le drapeau DR passe à 1 et l'organe de puissance est activé,
- entre t₃ et t₄ : la température de l'élément chauffant s élève et dépasse la valeur limite T_{L},
- temps t₄ : l'utilisateur opère un arrêt : l'organe de puissance est désactivé. L'élément chauffant se refroidit,
- temps t₅ : l'utilisateur opère une mise en fonctionnement. Le poids étant suffisant, l'organe de puissance est activé,
- temps t₆ : l'ustensile est retiré du foyer, le poids de la charge est nul, l'organe de puissance est désactivé. A partir de cet instant le temporisateur met en route une constante de temps Δt,
- temps t₇ : la même charge que précédemment est placée sur le foyer avec une durée t₆ t₇ inférieure à la constante de temps Δt. Mais la température du foyer est inférieure à la limite T_{L} et l'organe de puissance reste désactivé,
- temps t₈ : à la fin de la durée Δt, le drapeau DR repasse à l'état logique 0,
- temps t₉ : l'utilisateur opère une mise en fonctionnement, l'organe de puissance est activé,
- temps t₁₀ : l'ustensile est retiré, le poids de la charge s'annule, l'organe de puissance est désactivé,
- temps t₁₁ : l'ustensile, avec le même poids, est replacé. Automatiquement, l'organe de puissance est réactivé car la durée t₁₀ t₁₁ est inférieure à Δt,
- temps t₁₂ : l'ustensile est retiré, l'organe de puissance est désactivé,
- temps t₁₃ : l'ustensile avec le même poids est replacé mais la durée t₁₂ t₁₃ est supérieure à Δt. L'organe de puissance n'est pas réactivé. Il y a présomption que bien qu'opérant avec le même poids les deux opérations espacées de plus de Δt sont deux opérations disjointes,
- temps t₁₄ : l'utilisateur est obligé de remettre en route par la commande 9. L'organe de puissance est activé,
- temps t₁₅ : l'ustensile est retiré du foyer, l'organe de puissance est désactivé,
- temps t₁₆ : l'ustensile est replacé sur le foyer, avant la fin de la durée Δt, mais avec un poids inférieur, l'écart de poids étant supérieur à ΔP. L'organe de puissance n'est pas réactivé automatiquement,
- temps t₁₇ : à la fin de la durée Δt le drapeau DR repasse à zéro,
- temps t₁₈ : l'utilisateur opère une mise en fonctionnement, l'organe de puissance est activé,
- temps t₁₉ : l'ustensile est retiré, l'organe de puissance est désactivé,
- temps t₂₀ : l'ustensile est replacé sur le foyer, avant la fin de la durée Δt, mais avec un poids supérieur, l'écart de poids étant supérieur à ΔP. L'organe de puissance n'est pas réactivé automatiquement.
- temps t₂₁ : fin de la durée Δt, le drapeau DR passe à 0.

Sur la figure 4B on observe que dans la suite d'opérations donnée pour illustrer l'invention, les fenêtres de disponibilité pour un redémarrage automatique se sont présentées à trois occasions :
- une première occasion qui débute entre t₃ et t₄ lorsque la température du foyer atteint T_{L} et qui se termine lorsque l'utilisateur opère un arrêt (instant t₄),
- une seconde occasion qui débute entre t₉ et t₁₀ lorsque la température du foyer atteint T_{L} et qui se termine entre t₁₂ et t₁₃ à l'issue de la durée Δt,
- une troisième occasion qui débute entre t₁₄ et t₁₅ lorsque la température du foyer atteint T_{L} et qui se termine en t₁₆ lorsqu'un ustensile de poids très différent est placé.

L'invention concerne en premier lieu les opérations de redémarrage automatique de la mise en route des organes de puissance lorsque certaines conditions précédemment exposées sont satisfaites. L'invention concerne également l'opération de démarrage d'un foyer après une situation de désactivation de tous les organes de la table chauffante. Cela peut être l'action de l'utilisateur sur les commandes manuelles ou l'action du détecteur de présence. Sur ce point certaines situations ont été présentées lors de la description des exemples précédents. On peut distinguer le cas où une constante de temps intervient sur le démarrage et le cas où elle n'intervient pas. Les figures 5A à 5E illustrent différentes situations que l'on peut mettre en oeuvre pour opérer le démarrage. Cela n'est nullement exhaustif et d'autres situations peuvent être envisagées sans sortir du cadre de l'invention.

La figure 5A représente le cas où l'action de l'utilisateur est mémorisée par le drapeau DR, la mise en place d'un ustensile détecté par le détecteur de présence opérant ultérieurement la validation de cette action pour activer l'organe de puissance.

La figure 5B représente le cas où l'ustensile est tout d'abord placé puis l'action de l'utilisateur en actionnant le drapeau DR active l'organe de puissance.

La figure 5C représente le cas où le détecteur de présence active le drapeau DR, l'action ultérieure de l'utilisateur pouvant alors être validée pour activer l'organe de puissance.

Les figures 5D et 5E représentent le cas où une durée prédéterminée Δt' est également utilisée lors du démarrage. Dans ce cas l'action de l'utilisateur (respectivement du détecteur de présence) fait démarrer une constante de temps Δt' dans le temporisateur. Si le détecteur de présence (respectivement l'action de l'utilisateur) se manifeste après la fin de Δt' (figure 5D) alors l'organe de puissance n'est pas activé. Cela constitue une sécurité. Le drapeau DR repasse à l'état logique 0 à la fin de Δt'. Si le détecteur de présence (respectivement l'action de l'utilisateur) se manifeste avant la fin de Δt' (figure 5E) alors l'organe de puissance est activé, la seconde des deux actions servant également à maintenir le drapeau DR dans son état de validation (état 1).

L'opération de démarrage qui a priori opère à partir d'un foyer froid ne prend donc pas en compte la température du foyer. Par contre la mesure de poids (par exemple cas de la figure 4B au temps t₁) peut être prise en considération. L'homme du métier peut envisager d'autres situations sans sortir du cadre de l'invention.

Un témoin lumineux peut indiquer à l'utilisateur le moment pendant lequel la constante de temps est opérationnelle (état du temporisateur).

## Revendications

1. Table chauffante (10) munie d'au moins un foyer (12a) chauffé par au moins un élément chauffant activé par des commandes de fonctionnement (9),
- au moins un détecteur de présence (20) qui détecte lorsqu'au moins un foyer (12a) est muni d'un ustensile,
- des moyens de commande (18) pour désactiver ou réduire le chauffage dudit foyer lorsque le détecteur de présence (20) signale que l'ustensile a été enlevé,
caractérisée en ce qu'elle comprend :
- un temporisateur (22) qui réactive le chauffage dudit foyer lorsque le détecteur de présence (20) détecte que l'ustensile est replacé sur ledit foyer et que la durée de l'absence a été inférieure à une durée déterminée, le foyer étant en outre muni d'un détecteur de température (26), la durée déterminée étant celle nécessaire pour que la température du foyer devienne inférieure à une température prédéterminée.

2. Table chauffante selon la revendication 1, caractérisée en ce que le détecteur de présence (20) détecte le poids de l'ustensile.

3. Table chauffante selon la revendication 2, caractérisée en ce que, ladite réactivation du chauffage du foyer ne se fait que si la variation de poids de l'ustensile, entre les moments avant et après l'absence, est inférieure en valeur absolue à une limite prédéterminée.

4. Table chauffante selon la revendication 1 caractérisée en ce que le détecteur de présence (20) est un détecteur comprenant un émetteur et un récepteur de lumière ou d'ultra-sons.

5. Table chauffante selon la revendication 1 caractérisée en ce que, le détecteur de présence est soit un détecteur capacitif soit un détecteur inductif.

6. Table chauffante selon une des revendications 1 à 5, caractérisée en ce que, lors du démarrage à partir de conditions de repos, l'action de l'utilisateur ou l'action du détecteur de présence est soumise à une temporisation.

7. Table chauffante selon une des revendications 2 à 6, caractérisée en ce que, le démarrage à partir de conditions de repos ne peut être opéré que lorsque le poids de l'ustensile est supérieur à une limite prédéterminée.

## Patentansprüche

1. Heizplatte (10), die mit mindestens einer Kochstelle (12a) zum Heizen mittels eines Heizelements ausgestattet ist, das mit Hilfe von Bedienungselementen (9) aktiviert wird, mit
- mindestens einem Präsenzdetektor (20), der das Vorhandensein wenigstens eines Kochgeräts auf einer Kochstelle (12a) detektiert,
- Steuerungsmitteln (18) zur Deaktivierung oder Reduzierung der Heizung der genannten Kochstelle, wenn der Präsenzdetektor (20) signalisiert, daß das Kochgerät entfernt wurde,
dadurch gekennzeichnet, daß sie folgendes umfaßt:
- eine Zeitsteuerung (22), die die Heizung der genannten Kochstelle reaktiviert, wenn der Präsenzdetektor (20) detektiert, daß das Kochgerät auf die genannte Kochstelle zurückgestellt worden ist und daß die Dauer der Abwesenheit kürzer gewesen ist als eine bestimmte Dauer, wobei die Kochstelle außerdem mit einem Temperaturdetektor (26) ausgestattet ist, wobei die bestimmte Dauer diejenige ist, die nötig ist, damit die Temperatur der Kochstelle niedriger wird als eine vorbestimmte Temperatur.

2. Heizplatte nach Anspruch 1, dadurch gekennzeichnet, daß der Präsenzdetektor (20) das Gewicht des Kochgeräts detektiert.

3. Heizplatte nach Anspruch 2, dadurch gekennzeichnet, daß die genannte Reaktivierung der Heizung der Kochstelle nur dann erfolgt, wenn der Betrag der Veränderung des Gewichts des Kochgeräts zwischen den Zeitpunkten vor und nach der Abwesenheit geringer ist als ein vorbestimmter Schwellenwert.

4. Heizplatte nach Anspruch 1, dadurch gekennzeichnet, daß der Präsenzdetektor (20) ein Detektor mit einem Sender und einem Empfänger für Licht oder Ultraschall ist.

5. Heizplatte nach Anspruch 1, dadurch gekennzeichnet, daß der Präsenzdetektor entweder ein kapazitiver oder induktiver Detektor ist.

6. Heizplatte nach einem der Ansprüche 1 bis 5, dadurch gekennzeichnet, daß bei der Ingangsetzung ausgehend von einem Ruhezustand die Aktion des Benutzers oder des Präsenzdetektors einer Verzögerung unterworfen wird.

7. Heizplatte nach einem der Ansprüche 2 bis 6, dadurch gekennzeichnet, daß die Ingangsetzung ausgehend von einem Ruhezustand nur erfolgen kann, wenn das Gewicht des Kochgeräts größer ist als ein vorbestimmter Schwellenwert.

## Claims

1. A cook-top (10) having at least one cooking section (12a) heated by at least one heating element which is activated by function controls (9),
- at least one presence detector (20) which detects when at least one cooking section (12a) carries a utensil,
- control means (18) for deactivating or reducing the heating of said cooking section when the presence detector (20) signals that the utensil has been removed,
characterised in that it comprises:
- a timing means (22) which reactivates the heating of said cooking section when the presence detector (20) detects that the utensil has been put back onto said cooking section and that the time of absence is smaller than a given time, the cooking section further having a temperature detector (26), the given time being the time necessary to allow the temperature of the cooking section to decrease below a predetermined temperature.

2. A cook-top as claimed in Claim 1, characterised in that the presence detector (20) detects the weight of the utensil.

3. A cook-top as claimed in Claim 2, characterised in that said reactivation of the heating of the cooking section does not take place if the variation of the weight of the utensil between the instants before and after the absence has an absolute value smaller than a predetermined limit.

4. A cook-top as claimed in Claim 1, characterised in that the presence detector (20) is a detector comprising a light or ultrasonic emitter and receiver.

5. A cook-top as claimed in Claim 1, characterised in that the presence detector is either a capacitive detector or an inductive detector.

6. A cook-top as claimed in any one of the Claims 1 to 5, characterised in that during starting from the rest condition the action of the user or the action of the presence detector is subject to a delay.

7. A cook-top as claimed in any one of the Claims 2 to 6, characterised in that starting from the rest condition can be effected only when the weight of the utensil is higher than a predetermined limit.
